# EUROPEAN PATENT APPLICATION

(11) **EP 4 567 615 A1**
(43) Date of publication of application: **11.06.2025**
(21) Application number: 24151972.7
(22) Date of filing: 15.01.2024
(51) Int. Cl.: G06F 13/40, G06F 13/42

(54) **SERIAL PERIPHERAL INTERFACE CONTROL METHOD**

(30) Priority: 04.12.2023 US 202318527837
(71) Applicant: PCTEL, Inc., Bloomingdale, IL 60108 (US)
(72) Inventor: SUK, Ju Kwang, Bloomingdale, 60108 (US)
(74) Representative: Haseltine Lake Kempner LLP

(57) **Abstract**

A method and system are provided herein for serial peripheral interface (SPI) control. The method may first include setting a general purpose input/output (GPIO) register to select an SPI data bus from at least one of an SPI master. The method may proceed to setting the SPI master to send a first data set of SPI serial data. The first data set may be provided to an SPI slave device. A second data set may be retrieved from the SPI slave device.

## Description

### FIELD OF THE INVENTION

This disclosure generally pertains to telecommunications and radio frequency (RF) circuit boards, and specifically, to a system and method for controlling a serial peripheral interface (SPI).

### BACKGROUND OF THE INVENTION

RF circuit boards are designed for use in RF equipment, such as RF scanning receivers which often use several RF devices. These RF devices are controlled via software and are connected to serial data bus lines or general purpose input/output (GPIO) lines. The RF devices are often controlled via an SPI format or via an inter-integrated circuit (I2C) serial interface format. The RF devices are controlled by software through an SPI or I2C master of, a microprocessor or microcontroller.

Standard RF devices are controlled via an SPI bus interface connection. As used herein: CS means a chip selection signal that enables only a selected device; MISO means a serial data signal of the master input slave output line; MOSI means a serial data signal of the master output slave input line; SCLK means the serial clock signal against MOSI; and SDIO means the bidirectional serial data signal of the MOSI during the write mode or the serial data signal of the MISO during the read mode. The SPI bus includes the SCLK, MOSI, MISO, and CS in a four-wire mode. Alternatively, the SPI bus includes the SCLK, SDIO, and CS in a three-wire mode.

These standard systems, however, have several problems. First, because the total number of SPI bus and control lines must increase proportional to the number of SPI slave devices, it is difficult to route the traces in the printed circuit board (PCB) design. Further, when the number of traces increases in the RF board, it is difficult to isolate the RF signals that are coupled into SPI control lines.

Second, a standard SPI interface typically provides a maximum of a 12.5MHz clock; however, practically, this is limited to the specific device. When the SPI bus trace is routed over a long distance with a heavy serial load, the reflection in the transmission line causes undershooting and/or overshooting in data transition. The reflection causes a switching noise (e.g., a high frequency RF signal), which interferes with the desired RF signal. Loading several SPI devices into a single control line causes a glitch in an SCLK line due to the reflection in the long PCB trace. This leads to data corruption. In order to solve such glitches and corruption, the length of trace between SPI devices must be minimized.

Third, multiple SPI master types are required to support multiple SPI slave devices. However, it is desired to minimize the number of SPI master devices. SPI masters are divided into different data lengths, based on (n x 8) bit or non-(n x 8) bit. When SPI serial data width is (n x 8) bit wide, the processor sends transmit (TX) data and obtains receive (RX) data via an (n x 8) bit first-in-first-out. Occasionally, RF devices use non-(n x 8) bit format. This requires multiple SPI master chips, such as both a microcontroller and a programmable device, each of which can support non-(n x 8) bit wide SPI slave devices.

Fourth, GPIO pins are used as device chip selection. This requires multiple GPIO pins. However, microprocessors and microcontrollers typically have a limited number of input/output pins that are available. Standard SPI master devices typically support four CS lines, which can support four SPI slave devices directly. However, this leads to a lack of logic voltage level flexibility and design flexibility.

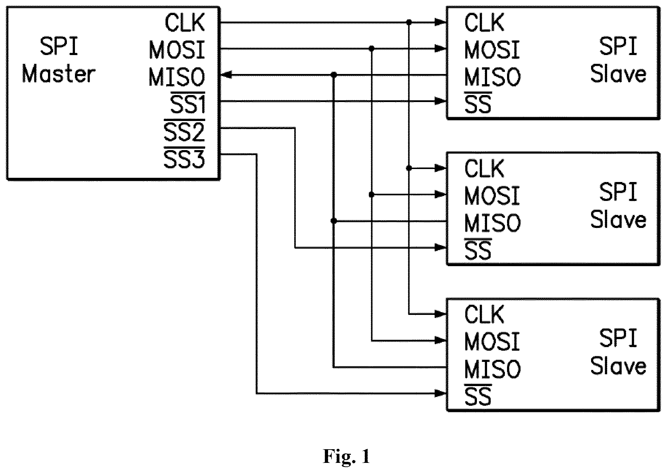

As illustrated in Fig. 1, a previous system set forth in an AN-1248 analog device, an SPI master and SPI slave are connected in a one-to-one CS. Because microcontrollers typically have a maximum of four SPI CS lines, this connection scheme does not support a connection to large SPI slave devices when the SPI master device is part of a microcontroller.

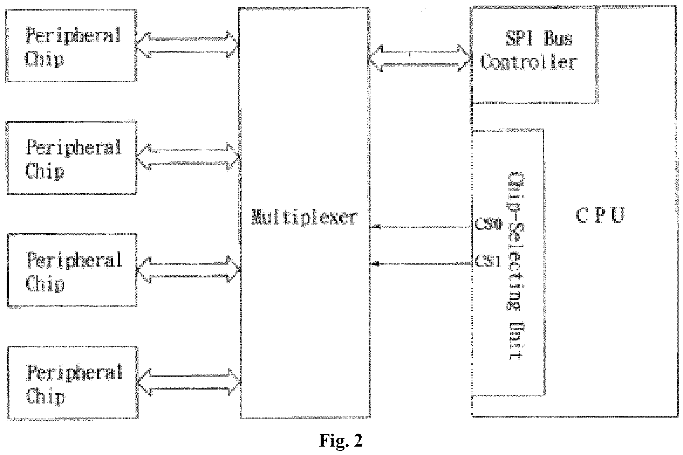

As illustrated in Fig. 2, a previous system set forth in U.S. Pat. Pub. No. 2007/0143512 to Heng-Chen Kuo, an SPI master is extended to individual SPI slave devices with an external multiplex slave. The multiplex slave is used to select the slave device with a single SPI master using a central processing unit (CPU). This implementation requires several single devices and long control traces in a PCB design, which is detrimental.

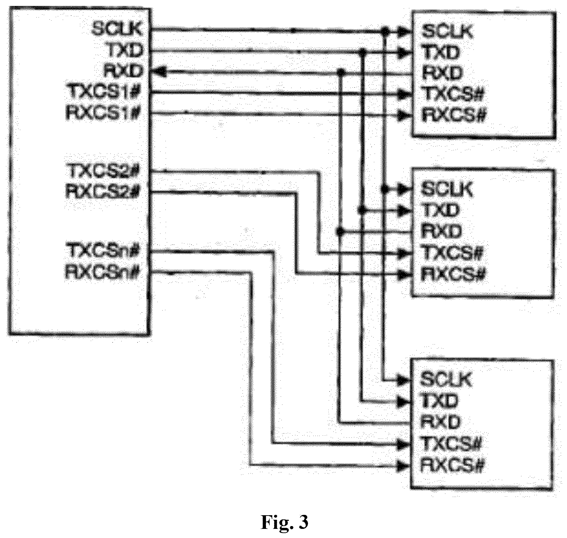

As illustrated in Fig. 3, a previous system set forth in U.S. Pat. No. 7,765,269 to Nobuyasu Kanekawa et al., an SPI master is extended to individual SPI slave devices one-by-one with separate TX and RX CS lines. These lines are used to select the slave device with a single SPI master using a CPU. This implementation requires TXCS1 and RXCS1 separately, which is not a standard SPI bus format used in RF devices.

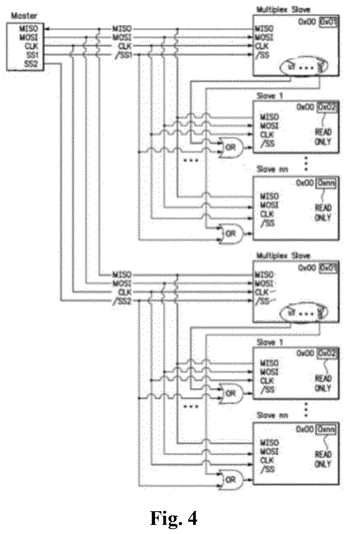

As illustrated in Fig. 4, a previous system set forth in U.S. Pat. No. 8,433,838 to Timothy Crockett et al., an SPI master is extended to individual SPI slave devices one-by-one with an external multiplex slave. The multiplex slave is used to select the slave device with a single SPI master using a CPU. This implementation requires several single devices and long control traces in a PCB design, which is detrimental.

The aforementioned prior systems fail to provide SPI control with less devices. As such, a need exists to solve the aforementioned issues and provide a method for SPI control with less devices and with more flexibility.

### BRIEF SUMMARY OF THE INVENTION

The present invention overcomes many of the shortcomings and limitations of the prior devices and systems discussed above. The invention described herein includes several embodiments of an SPI control system and method.

As set forth with more detail herein, the present disclosure addresses the aforementioned setbacks with respect to the prior devices discussed above. The present disclosure sets forth a system and method to minimize the SPI line control from the SPI master to SPI slave devices using an SPI multiplex chip. The disclosure herein supports multiple types of SPI masters with different serial data width. The method and system provided herein provides flexibility in RF design.

A first aspect of this disclosure pertains to a method for serial peripheral interface (SPI) control comprising: setting a general purpose input/output (GPIO) register to select an SPI data bus from at least one of an SPI master; setting the SPI master to send a first data set of SPI serial data; providing the first data set to an SPI slave device; and retrieving a second data set from the SPI slave device.

A second aspect of this disclosure pertains to the method of the first aspect, wherein the first data set is retrieved via at least one of: a chip selection signal that enables only a selected device; a serial data signal of a master output slave input line; and a serial clock signal against the serial data signal of the master output slave input line.

A third aspect of this disclosure pertains to the method of the first aspect, wherein the second data set is retrieved via a serial data signal of the master input slave output line.

A fourth aspect of this disclosure pertains to the method of the second aspect, further comprising deactivating the chip selection signal.

A fifth aspect of this disclosure pertains to the method of the first aspect, wherein the SPI data bus includes at least two groups of directional signals.

A sixth aspect of this disclosure pertains to the method of the fifth aspect, wherein the at least two groups of directional signals comprise a transmit group and a receive group.

A seventh aspect of this disclosure pertains to the method of the sixth aspect, wherein the transmit group sends data from the SPI master group to the SPI slave device.

An eighth aspect of this disclosure pertains to the method of the sixth aspect, wherein the receive group sends data from the SPI master group to the SPI slave device.

A ninth aspect of this disclosure pertains to a system for serial peripheral interface (SPI) control comprising a microcontroller configured to: set a general purpose input/output (GPIO) register to select an SPI data bus from at least one of an SPI master; set the SPI master to send a first data set of SPI serial data; provide the first data set to an SPI slave device; and retrieve a second data set from the SPI slave device.

A tenth aspect of this disclosure pertains to the system of the ninth aspect, wherein the first data set is retrieved via at least one of: a chip selection signal that enables only a selected device; a serial data signal of a master output slave input line; and a serial clock signal against the serial data signal of the master output slave input line.

An eleventh aspect of this disclosure pertains to the system of the ninth aspect, wherein the second data set is retrieved via a serial data signal of the master input slave output line.

A twelfth aspect of this disclosure pertains to the system of the tenth aspect, wherein the microcontroller is further configured to deactivate the chip selection signal.

A thirteenth aspect of this disclosure pertains to the system of the ninth aspect, wherein the SPI data bus includes at least two groups of directional signals.

A fourteenth aspect of this disclosure pertains to the system of the thirteenth aspect, wherein the at least two groups of directional signals comprise a transmit group and a receive group.

A fifteenth aspect of this disclosure pertains to the system of the fourteenth aspect, wherein the transmit group sends data from the SPI master group to the SPI slave device.

A sixteenth aspect of this disclosure pertains to the system of the fourteenth aspect, wherein the receive group sends data from the SPI master group to the SPI slave device.

A seventeenth aspect of this disclosure pertains to a method for serial peripheral interface (SPI) control comprising: setting a general purpose input/output (GPIO) register to select an SPI data bus from at least one of an SPI master; setting the SPI master to send a first data set of SPI serial data; and providing the first data set to an SPI slave device.

An eighteenth aspect of this disclosure pertains to the system of the seventeenth aspect, further comprising retrieving a second data set from the SPI slave device.

A nineteenth aspect of this disclosure pertains to the system of the seventeenth aspect, wherein the first data set is retrieved via at least one of: a chip selection signal that enables only a selected device; a serial data signal of a master output slave input line; and a serial clock signal against the serial data signal of the master output slave input line.

A twentieth aspect of this disclosure pertains to the system of the seventeenth aspect, wherein the second data set is retrieved via a serial data signal of the master input slave output line.

### BRIEF DESCRIPTION OF THE DRAWINGS

Fig. 1 is an SPI master and SPI slave in a one-to-one CS according to a previous system set forth in an AN-1248 analog device.
Fig. 2 is an SPI master to individual SPI slave devices with an external multiplex slave used to select the slave device with a single SPI master using a CPU according to a previous system set forth in U.S. Pat. Pub. No. 2007/0143512 to Heng-Chen Kuo.
Fig. 3 is an SPI master to individual SPI slave devices one-by-one with separate TX and RX chip selection lines used to select the slave device with a single SPI master using a CPU according to a previous system set forth in U.S. Pat. No. 7,765,269 to Nobuyasu Kanekawa et al.
Fig. 4 is an SPI master to individual SPI slave devices one-by-one with an external multiplex slave used to select the slave device with a single SPI master using a CPU according to a previous system set forth in U.S. Pat. No. 8,433,838 to Timothy Crockett et al.
Fig. 5 is an SPI communication system controlling an SPI slave group from an SPI master group according to various embodiments of the present disclosure.
Fig. 6 is an SPI master group according to various embodiments of the present disclosure.
Fig. 7 is an SPI bus switch according to various embodiments of the present disclosure.
Fig. 8 is an SPI slave to a GPIO converter according to various embodiments of the present disclosure.
Fig. 9 is a flowchart of SPI bus control according to various embodiments of the present disclosure.

Before explaining the disclosed embodiment of the present invention in detail, it is to be understood that the invention is not limited in its application to the details of the particular arrangement shown, since the invention is capable of other embodiments. Exemplary embodiments are illustrated in referenced figures of the drawings. It is intended that the embodiments and figures disclosed herein are to be considered illustrative rather than limiting. Also, the terminology used herein is for the purpose of description and not of limitation.

### DETAILED DESCRIPTION

While this invention is susceptible of embodiments in many different forms, there are shown in the drawings and will be described in detail herein specific embodiments with the understanding that the present disclosure is an exemplification of the principles of the invention. It is not intended to limit the invention to the specific illustrated embodiments. The features of the invention disclosed herein in the description, drawings, and claims can be significant, both individually and in any desired combinations, for the operation of the invention in its various embodiments. Features from one embodiment can be used in other embodiments of the invention.

As described herein, the aforementioned problems of standard devices may be solved. For example, the present disclosure sets forth solutions to reduce the number of control lines, to reduce the interference of RF signal via SPI control lines and minimization of trace length, and to provide flexibility of circuit design and reduction of SPI control devices. These solutions may be achieved using field programmable gate arrays or complex programmable logic devices.

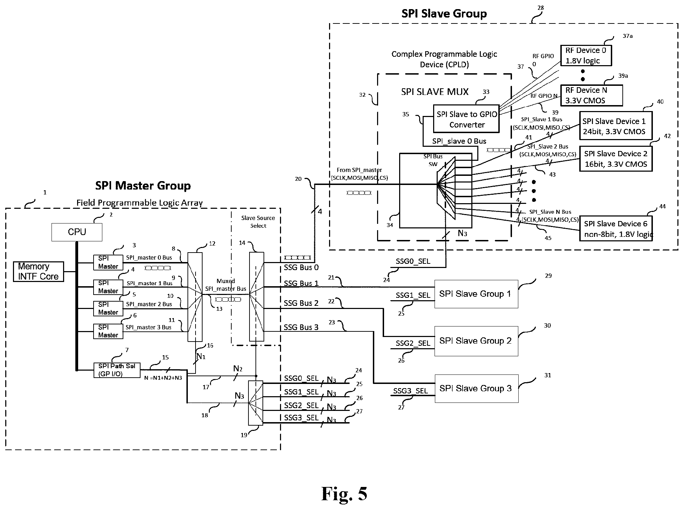

Turning first to Fig. 5, an SPI communication system may include an SPI master group 1 and several SPI slave groups 28, 29, 30, 31. The SPI master group 1 may be implemented in a field programable gate array. The SPI master group 1 may include: SPI master cores 3, 4, 5, 6; an SPI master switch 12; an SPI slave switch 14; an SPI slave path switch 19; and a GPIO register 7. The SPI masters 3, 4, 5, 6 may be the main cores to provide the SPI connection to the SPI slave devices 28, 29, 30, 31. The SPI masters 3, 4, 5, 6 may convert parallel data from a CPU 2 to one of a serial SPI bus format, SCLK, MOSI, MISO, and CS.

The SPI masters 3, 4, 5, 6 may support different serial data widths (e.g., (n x 8) bit, non-(n x 8) bit). The SPI master module may be controlled by the CPU 2 in order to support such the variable data widths. The SPI master switch 12 may select one of the SPI master buses 8, 9, 10, 11 based on N1 bit 16, which may be controlled via the GPIO register 7, which may be under common control from the CPU 2.

The SPI slave bus switch 14 may select one of the SPI slave groups 28, 29, 30, 31, which may be controlled via the GPIO register 7. The SPI slave bus switch 14 may be located out of the field programmable gate array when an SPI slave group 28, 29, 30, 31 is located in a separated PCB. The GPIO register 7 and SPI slave path switch 19 may drive SPI control signals. Such control signals may be divided in three groups (N1 bit SPI_Core_SEL 16; N2 bit SPI_Slave_Group_Sel 17; N3 bit SPI_Slave_Device_Sel 18) which may be used for each SPI switch. N1 bit may correspond to a decimal to binary conversion of the total number of SPI master modules; N2 bit may correspond to a decimal to binary conversion of the total number of SPI slave groups; N3 may correspond to a decimal to binary conversion of a maximum number of SPI slave devices. A total number of SPI bus control lines may depend upon the number of SPI masters, SPI slave groups, and SPI slave devices. The SPI slave path switch 19 may choose a path to the SPI slave group where the selected SPI slave device is located.

The SPI slave group 28, as illustrated in Fig. 5, may include an SPI slave multiplexer 32, and multiple slave devices 37a, 39a, 40, 42, 44. The SPI slave multiplexer 32 may include an SPI slave to GPIO converter 33 and an SPI bus switch 34.

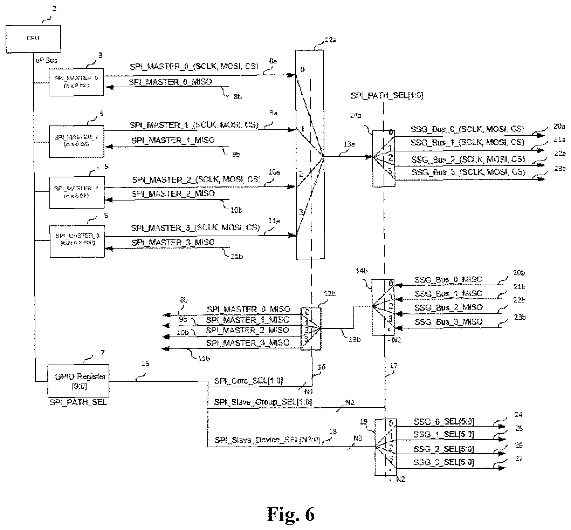

Turning now to Fig. 6, the SPI master group 1 may have two groups of directional signals. One group may be a transmit group coming from the SPI masters 3, 4, 5, 6 to the SPI slave devices 28, 29, 30, 31. Such group may use SCLK, MOSI, or CS. One group may be a receive group coming from the SPI slave devices 28, 29, 30, 31 to the SPI masters 3, 4, 5, 6. Such group may use MISO. SPI master bus switch 12 may include a transmit group switch 12a and a receive group switch 12b. SPI slave bus switch 14 may include a transmit group switch 14a and a receive group switch 14b. The SPI slave path switch 19 may be a unidirectional switch from the SPI master module to the SPI slave device module.

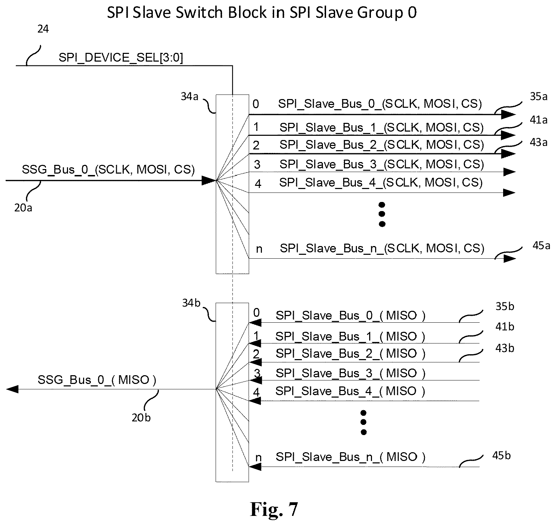

The SPI slave switch 34, as illustrated in Fig 7, may include a transmit group switch 34a and a receive group switch 34b. The transmit group switch 34a may select the SPI transmit signals from the SPI master to the SPI slave devices via the path selection control lines 24, and such connection may be SCLK, MOSI, or CS. The receive group switch 34b may select an SPI receive signal from an SPI slave device to an SPI master via the path selection control lines 24, and such connection may be MISO.

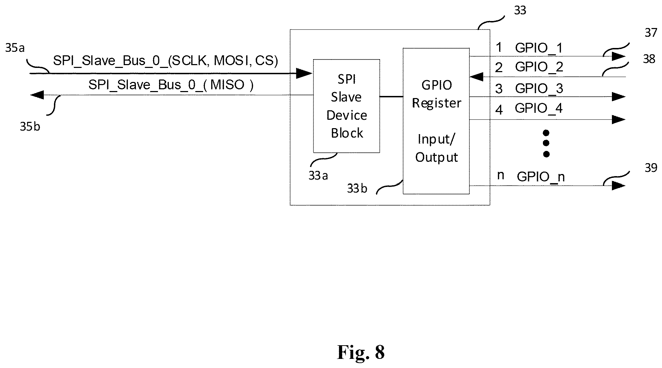

The SPI to GPIO converter 33, as illustrated in Fig. 8, may include SPI receiver block 33a and GPIO register 33b, which may latch serial SPI data into multiple GPIO signals. The GPIO register 33b may be within the multiplexer 32 and may interface between the SPI slave devices at the GPIO pins. The SPI slave bus may be routed from an internal SPI bus switch 34 which may interface to an internal SPI slave device block 33a. The SPI slave device block 33a may receive incoming SPI serial data and may latch to the GPIO register 33b. The SPI slave device block may be connected to GPIO pins 37, 38, 39. Incoming GPIO pin status 38 may be read by the SPI slave device block 33a and may transmit to the SPI master through a MISO line 35b.

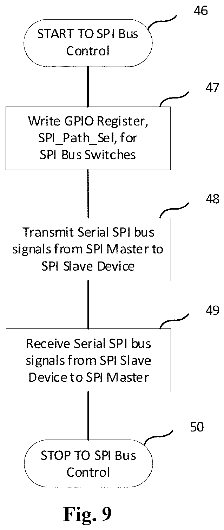

When a prospective slave SPI bus is selected, SPI bus control may be achieved by connecting each SPI device to MOSI, SCLK, and CS signals from the SPI master and via MISO signal toward the SPI master. Turning now to Fig. 9, a method for SPI bus control may begin at step 46. At step 47, the method may proceed to set the GPIO register 7 latches to the SPI selection signals to select the SPI data bus from the SPI master to the SPI devices according to a CPU control command. SPI path signals 15 may be divided to select the SPI bus path for SPI master switch 12, SPI slave switch 14, SPI path switch 19 in SPI master group 1, and SPI bus switch 34 in SPI slave group 28.

For exemplary purposes, the SPI master switch 12 may be set to SPI master bus 8, 8a, and 8b. The SPI slave switch 14 may be set to SPI slave bus 41, 41a, and 41b. Such SPI slave bus may be connected to an SPI interface of the SPI slave device 40. At step 48, the method may proceed to set the SPI master 3 to send the SPI serial data. The outputs from the SPI master 3 and the SCLK, MOSI, and CS signals may be sent to the SPI slave device 40. At step 49, the method may proceed to retrieve the serial read data from SPI slave device 40 via the MISO lines 8b, 20b, and 41b, if it is available. The method may terminate at step 50 to deactivate the CS signal of the SPI master.

Specific embodiments of a method for SPI control according to the present invention have been described for the purpose of illustrating the manner in which the invention can be made and used. It should be understood that the implementation of other variations and modifications of this invention and its different aspects will be apparent to one skilled in the art, and that this invention is not limited by the specific embodiments described. Features described in one embodiment can be implemented in other embodiments. The subject disclosure is understood to encompass the present invention and any and all modifications, variations, or equivalents that fall within the scope of the basic underlying principles disclosed and claimed herein.

The following numbered statements are useful for understanding the invention:
1. A method for serial peripheral interface (SPI) control comprising: setting a general purpose input/output (GPIO) register to select an SPI data bus from at least one of an SPI master; setting the SPI master to send a first data set of SPI serial data; providing the first data set to an SPI slave device; and retrieving a second data set from the SPI slave device.
2. The method of statement 1, wherein the first data set is retrieved via at least one of: a chip selection signal that enables only a selected device; a serial data signal of a master output slave input line; and a serial clock signal against the serial data signal of the master output slave input line.
3. The method of statement 1, wherein the second data set is retrieved via a serial data signal of the master input slave output line.
4. The method of statement 2, further comprising deactivating the chip selection signal.
5. The method of statement 1, wherein the SPI data bus includes at least two groups of directional signals.
6. The method of statement 5, wherein the at least two groups of directional signals comprise a transmit group and a receive group.
7. The method of statement 6, wherein the transmit group sends data from the SPI master group to the SPI slave device.
8. The method of statement 6, wherein the receive group sends data from the SPI master group to the SPI slave device.
9. A system for serial peripheral interface (SPI) control comprising a microcontroller configured to: set a general purpose input/output (GPIO) register to select an SPI data bus from at least one of an SPI master; set the SPI master to send a first data set of SPI serial data; provide the first data set to an SPI slave device; and retrieve a second data set from the SPI slave device.
10. The system of statement 9, wherein the first data set is retrieved via at least one of: a chip selection signal that enables only a selected device; a serial data signal of a master output slave input line; and a serial clock signal against the serial data signal of the master output slave input line.
11. The system of statement 9, wherein the second data set is retrieved via a serial data signal of the master input slave output line.
12. The system of statement 10, wherein the microcontroller is further configured to deactivate the chip selection signal.
13. The system of statement 9, wherein the SPI data bus includes at least two groups of directional signals.
14. The system of statement 13, wherein the at least two groups of directional signals comprise a transmit group and a receive group.
15. The system of statement 14, wherein the transmit group sends data from the SPI master group to the SPI slave device.
16. The system of statement 14, wherein the receive group sends data from the SPI master group to the SPI slave device.
17. A method for serial peripheral interface (SPI) control comprising: setting a general purpose input/output (GPIO) register to select an SPI data bus from at least one of an SPI master; setting the SPI master to send a first data set of SPI serial data; and providing the first data set to an SPI slave device.
18. The method of statement 17, further comprising retrieving a second data set from the SPI slave device.
19. The method of statement 17, wherein the first data set is retrieved via at least one of: a chip selection signal that enables only a selected device; a serial data signal of a master output slave input line; and a serial clock signal against the serial data signal of the master output slave input line.
20. The method of statement 17, wherein the second data set is retrieved via a serial data signal of the master input slave output line.

## Claims

1. A method for serial peripheral interface, SPI, control comprising:
setting a general purpose input/output, GPIO, register to select an SPI data bus from at least one of an SPI master;
setting the SPI master to send a first data set of SPI serial data; and
providing the first data set to an SPI slave device.

2. The method of claim 1, further comprising retrieving a second data set from the SPI slave device.

3. The method of claim 1 or claim 2, wherein the first data set is retrieved via at least one of:
a chip selection signal that enables only a selected device, and optionally wherein the method further comprises deactivating the chip selection signal;
a serial data signal of a master output slave input line; and
a serial clock signal against the serial data signal of the master output slave input line.

4. The method of any preceding claim, wherein the second data set is retrieved via a serial data signal of the master input slave output line.

5. The method of any preceding claim, wherein the SPI data bus includes at least two groups of directional signals.

6. The method of claim 5, wherein the at least two groups of directional signals comprise a transmit group and a receive group.

7. The method of claim 6, wherein the transmit group sends data from the SPI master group to the SPI slave device, and/or wherein the receive group sends data from the SPI master group to the SPI slave device.

8. A system for serial peripheral interface, SPI, control comprising a microcontroller configured to:
set a general purpose input/output, GPIO, register to select an SPI data bus from at least one of an SPI master;
set the SPI master to send a first data set of SPI serial data; and
provide the first data set to an SPI slave device.

9. The system of claim 8, wherein the microcontroller is further configured to retrieve a second data set from the SPI slave device.

10. The system of claim 8 or claim 9, wherein the first data set is retrieved via at least
one of:
a chip selection signal that enables only a selected device, and optionally wherein the microcontroller is further configured to deactivate the chip selection signal;
a serial data signal of a master output slave input line; and
a serial clock signal against the serial data signal of the master output slave input line.

11. The system of any of claims 8 to 10, wherein the second data set is retrieved via a serial data signal of the master input slave output line.

12. The system of any of claims 8 to 11, wherein the SPI data bus includes at least two groups of directional signals.

13. The system of claim 12, wherein the at least two groups of directional signals comprise a transmit group and a receive group, and/or wherein the transmit group sends data from the SPI master group to the SPI slave device.

14. The system of claim 14, wherein the receive group sends data from the SPI master group to the SPI slave device.
